# FASCICULE DE BREVET EUROPEEN

(11) **EP 1 442 971 B1**
(45) Date de publication et mention de la délivrance du brevet: **28.03.2007**
(21) Numéro de dépôt: 04290123.1
(22) Date de dépôt: 16.01.2004
(51) Int. Cl.: B62J 17/02

(54) **Tablier de protection rigidifié pour véhicule**
Versteifte Schutzschürze für Fahrzeug
Stiffened protective cover for a vehicle

(30) Priorité: 28.01.2003 FR 0300924
(43) Date de publication de la demande: 04.08.2004
(73) Titulaire: Bagster, 61600 La Ferte Mace (FR)
(72) Inventeur: Briant, Jean-Marc, 61600 St-Maurice du Desert La Ferte Mace (FR); Madeleine, Thierry, 61600 La Ferte Mace (FR); Nicolas, Jacques, 61220 la Coulonche (FR)
(74) Mandataire: Rousset, Jean-Claude

(56) Documents cités:
- EP-A- 1 346 906
- DE-A- 4 029 261
- DE-A- 4 029 284
- DE-A- 10 053 765
- GB-A- 2 360 263

## Description

L'invention concerne un tablier de protection pour protéger des intempéries le conducteur d'un véhicule découvert tel qu'un véhicule à deux roues ou à quatre roues ou tout autre véhicule, comprenant une nappe souple propre à recouvrir en partie le corps du conducteur, et des moyens de rigidification destinés à éviter les battements du tablier lorsque le véhicule roule.

On connaît divers systèmes de rigidification du tablier, dont aucun ne donne entièrement satisfaction. En particulier, il a été proposé de rigidifier le tablier au moyen d'un feuillard métallique inséré dans un fourreau. Ce système ne supprime pas totalement le battement du tablier et le feuillard vient frapper les flancs du véhicule et/ou les jambes du pilote. Le doublage de la nappe par une autre matière plus rigide rend le tablier très lourd et inconfortable pour le pilote. On connaît enfin un système de bouée gonflable qui rigidifie le tablier en permanence et empêche de rouler celui-ci quand il ne pleut pas, ou bien nécessite un dégonflage et un regonflage à chaque utilisation. De plus, la rigidité du tablier gêne le pilote lorsqu'il quitte son véhicule. Le document DE 4 029 284 décrit un tablier de protection tel que défini dans le préambule de la revendication 1. Par ailleurs, on connaît d'après EP-A-1 346 906, qui fait partie de l'état de la technique en vertu des articles 54(3) et (4) CBE, un tablier du genre défini en introduction, dans lequel les moyens de rigidification comprennent au moins une tubulure à paroi souple orientée sensiblement dans la direction avant-arrière de manière à être gonflée et rigidifiée par de l'air qui y pénètre lorsque le véhicule roule, et dont la paroi est formée au moins en partie par un élément rapporté sur la face extérieure ou sur la face intérieure de ladite nappe.

Le but de l'invention est de remédier aux inconvénients des systèmes connus, et notamment de proposer des moyens assurant une rigidification efficace lorsque le véhicule roule, évitant tout battement, ne gênant pas le pilote pour quitter le véhicule et permettant de rouler le tablier.

L'invention vise notamment un tablier du genre défini par EP-A-1 346 906, et prévoit que la tubulure présente une section de passage d'air qui diminue progressivement de l'ouverture d'entrée d'air à l'ouverture de sortie d'air.

Sa paroi étant souple, la tubulure ne gêne pas la descente du véhicule, ni le roulage du tablier. En revanche, le gonflage de la tubulure par l'air qui s'engouffre assure une rigidification d'autant plus forte que le véhicule roule plus vite.

Des caractéristiques optionnelles de l'invention, complémentaires ou de substitution, sont énoncées ci-après:
- La tubulure présente une section de sortie d'air plus petite que sa section d'entrée d'air.
- Des moyens sont prévus pour régler la section d'entrée d'air et/ou la section de sortie d'air.
- La paroi de la tubulure est formée en partie par ladite nappe et en partie par ledit élément rapporté.
- La paroi de la tubulure est formée en totalité par ledit élément rapporté.
- La tubulure est sensiblement droite.
- La tubulure est incurvée.
- La tubulure présente une entrée d'air unique et se ramifie vers au moins deux sorties d'air.
- Au moins deux tubulures sont mutuellement adjacentes dans la direction de la hauteur et/ou dans la direction de la largeur du véhicule.
- Au moins deux tubulures sont mutuellement écartées dans la direction de la hauteur et/ou dans la direction de la largeur du véhicule.

Les caractéristiques et avantages de l'invention seront exposés plus en détail dans la description ci-après, en se référant aux dessins annexés.

La figure 1 est une vue en perspective d'une motocyclette munie d'un tablier de protection selon l'invention.

Les figures 2 à 6 sont des vues en perspective de cinq modes de réalisation d'un tablier de protection utilisable avec le véhicule de la figure 1.

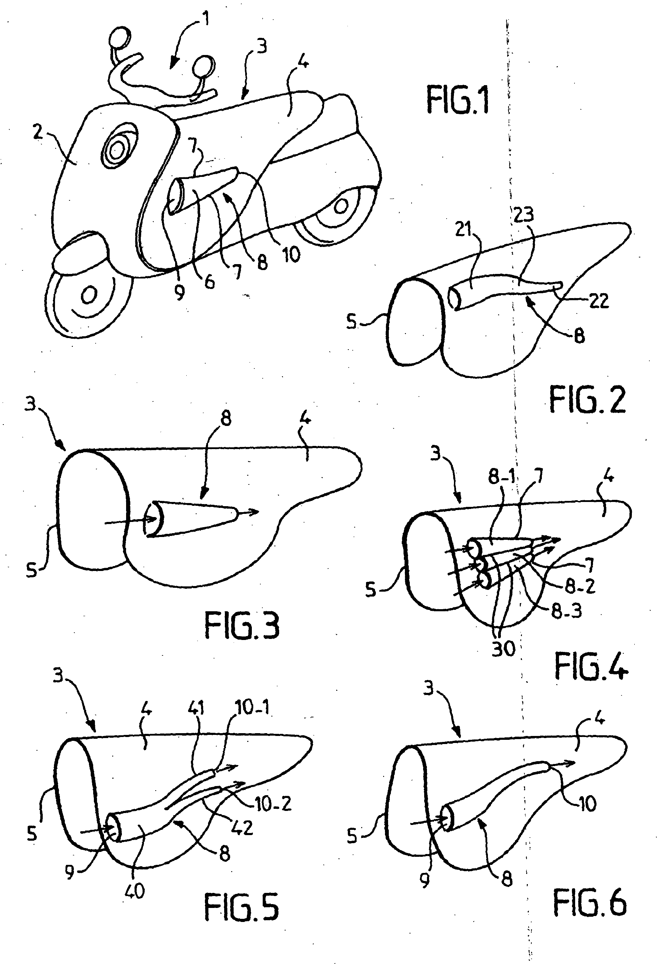

La figure 1 représente une motocyclette 1 présentant une carrosserie du type scooter comportant une paroi avant transversale 2. Cette motocyclette est équipée d'un tablier de protection 3 comprenant de manière connue une nappe souple 4, par exemple en cuir ou en tissu, qui est fixée par un bord 5 (figures 2 à 6) à la paroi 2 et qui s'étend vers l'arrière à partir de ce bord pour recouvrir au moins les jambes du conducteur.

Selon l'invention, un élément mince souple 6 est rapporté sur le flanc gauche de la nappe 4, auquel il est solidarisé selon deux bords longitudinaux 7, par exemple par collage, par couture ou par soudure. L'élément 6, qui peut être formé du même matériau et présenter la même épaisseur que la nappe 3, définit, en combinaison avec la partie de cette dernière située entre les lignes de jonction avec les bords 7, une tubulure 8 qui s'étend généralement de l'avant vers l'arrière de la motocyclette entre une ouverture d'entrée 9 et une ouverture de sortie 10 tournées respectivement vers l'avant et vers l'arrière.

Lorsque la motocyclette roule, de l'air s'engouffre dans la tubulure 8 par l'ouverture 9 et en ressort par l'ouverture 10, assurant un gonflement de la tubulure qui devient alors rigide. Avantageusement, la section de passage de l'ouverture 9 est plus grande que celle de l'ouverture 10 à l'état gonflé de la tubulure. En outre, les lignes de jonction 7 entre la nappe 4 et l'élément rapporté 6 peuvent être non pas fixes mais réglables, par exemple à l'aide de boutons-pressions ou de bandes auto-agrippantes, de manière à faire varier la section d'entrée et/ou la section de sortie, et par suite le degré de rigidité de la tubulure pour une vitesse donnée de la motocyclette. En principe, une tubulure semblable à la tubulure 8, non visible sur la figure, est prévue sur le côté droit du tablier, les deux tubulures étant avantageusement symétriques l'une de l'autre par rapport au plan de symétrie de la motocyclette.

Les figures 2 à 6 montrent différents types de tubulures appliquées sur des nappes 4 semblables à celle de la figure 1.

Sur la figure 2, la tubulure est incurvée sensiblement en S inversé et présente une partie avant 21 s'étendant sensiblement horizontalement, une partie arrière 22 s'étendant sensiblement horizontalement, à un niveau plus bas que la partie 21, et raccordée à celle-ci par une partie intermédiaire descendante 23.

La tubulure 8 de la figure 3 est sensiblement droite et orientée sensiblement horizontalement.

Le tablier 3 de la figure 4 présente trois tubulures 8-1, 8-2, 8-3, superposées de haut en bas sur le flanc de la nappe 4. Ces trois tubulures peuvent être formées par un élément rapporté unique lié à la nappe 4 selon des lignes de jonction supérieure et inférieure 7 et deux lignes de jonction intermédiaire 30. Dans une variante non représentée, deux tubulures ou plus sont disposées les unes au-dessus des autres, et écartées les unes des autres, sur le même flanc de la nappe.

La tubulure 8 représentée sur la figure 5 comprend un tronc amont 40 muni d'une ouverture d'entrée 9, se raccordant à deux branches aval 41, 42 munies d'ouvertures de sortie respective 10-1, 10-2, la somme des sections des ouvertures de sortie étant inférieure à la section de l'ouverture d'entrée. La tubulure a une forme générale incurvée, les ouvertures de sortie étant cette fois disposées plus haut que l'ouverture d'entrée.

La figure 6 montre une tubulure 8 ayant la même forme que celle de la figure 2 mais inversée, en ce sens que son ouverture de sortie 10 est située plus haut que son ouverture **d'entrée 9.**

Bien que l'invention ait été décrite en relation avec une motocyclette de type scooter, il va de soi qu'elle est utilisable avec n'importe quel véhicule découvert susceptible de recevoir un tablier de protection, y compris un véhicule à quatre roues. Par ailleurs, un élément rapporté de forme tubulaire peut constituer à lui seul une tubulure de rigidification. En variante, une tubulure de rigidification peut être formée totalement ou en partie par un élément rapporté sur la face intérieure de la nappe et non sur sa face extérieure.

## Revendications

1. Tablier de protection (3) pour protéger des intempéries le conducteur d'un véhicule découvert tel qu'un véhicule à deux roues (1) ou à quatre roues ou tout autre véhicule, comprenant une nappe souple (4) propre à recouvrir en partie le corps du conducteur, et des moyens de rigidification destinés à éviter les battements du tablier lorsque le véhicule roule, les moyens de rigidification comprenant au moins une tubulure (8) à paroi souple orientée sensiblement dans la direction avant-arrière de manière à être gonflée et rigidifiée par de l'air qui y pénètre lorsque le véhicule roule, et dont la paroi est formée au moins en partie par un élément (6) rapporté sur la face extérieure ou sur la face intérieure de ladite nappe, **caractérisé en ce que** la tubulure (8) présente une section de passage d'air qui diminue progressivement de l'ouverture d'entrée d'air (9) à l'ouverture de sortie d'air (10).

2. Tablier selon la revendication 1, dans lequel la tubulure présente une section de sortie d'air (10) plus petite que sa section d'entrée d'air (9).

3. Tablier selon l'une des revendications précédentes, dans lequel des moyens sont prévus pour régler la section d'entrée d'air et/ou la section de sortie d'air.

4. Tablier selon l'une des revendications précédentes, dans lequel la paroi de la tubulure est formée en partie par ladite nappe et en partie par ledit élément rapporté (6).

5. Tablier selon l'une des revendications précédentes, dans lequel la paroi de la tubulure est formée en totalité par ledit élément rapporté.

6. Tablier selon l'une des revendications précédentes, dans lequel la tubulure est sensiblement droite.

7. Tablier selon l'une des revendications 1 à 5, dans lequel la tubulure est incurvée.

8. Tablier selon l'une des revendications précédentes, dans lequel la tubulure présente une entrée d'air unique (9) et se ramifie vers au moins deux sorties d'air (10-1, 10-2).

9. Tablier selon l'une des revendications précédentes, dans lequel au moins deux tubulures (8-1, 8-2, 8-3) sont mutuellement adjacentes dans la direction de la hauteur et/ou dans la direction de la largeur du véhicule.

10. Tablier selon l'une des revendications précédentes, dans lequel au moins deux tubulures sont mutuellement écartées dans la direction de la hauteur et/ou dans la direction de la largeur du véhicule.

## Claims

1. A protective cover (3) for protecting from bad weather the driver of an open vehicle such as a two-wheeled (1) or four-wheeled vehicle or any other vehicle, comprising a flexible sheet (4) suitable for partially covering the body of the driver, and stiffening means intended to prevent flapping of the cover when the vehicle is in motion, the stiffening means comprising at least one flexible-walled tube (8) oriented substantially in the fore-and-aft direction so as to be inflated and stiffened by air which penetrates therein when the vehicle is in motion, and the wall of which is formed at least in part by an element (6) added on to the outer face or to the inner face of said sheet, **characterized in that** the tube (8) has an air passage cross-section which gradually decreases from the air inlet opening (9) to the air outlet opening (10).

2. A cover according to claim 1, wherein the tube has an air outlet cross-section (10) smaller than its air inlet cross-section (9).

3. A cover according to any one of the preceding claims, wherein means are provided for adjusting the air inlet cross-section and/or the air outlet cross-section.

4. A cover according to any one of the preceding claims, wherein the wall of the tube is formed in part by the said sheet and in part by the said added-on element (6).

5. A cover according to any one of the preceding claims, wherein the wall of the tube is formed entirely by the said added-on element.

6. A cover according to any one of the preceding claims, wherein the tube is substantially straight.

7. A cover according to any one of claims 1 to 5, wherein the tube is curved.

8. A cover according to any one of the preceding claims, wherein the tube has a single air inlet (9) and branches towards at least two air outlets (10-1, 10-2).

9. A cover according to any one of the preceding claims, wherein at least two tubes (8-1, 8-2, 8-3) are adjacent to one another in the direction of the height and/or in the direction of the width of the vehicle.

10. A cover according to any one of the preceding claims, wherein at least two tubes are spaced from one another in the direction of the height and/or in the direction of the width of the vehicle.

## Patentansprüche

1. Schlechtwetterschutz-Schürze (3) für den Fahrer eines offenen Fahrzeugs wie etwa eines Zweiradfahrzeugs (1) oder eines Vierradfahrzeugs oder jedes anderen Fahrzeugs, eine nachgiebige Decke (4), die den Körper des Fahrers teilweise bedeckt, sowie Versteifungseinrichtungen umfassend, die dazu bestimmt sind, das Flattern der Schürze zu verhindern, wenn das Fahrzeug fährt, wobei die Versteifungseinrichtungen wenigstens eine Röhre (8) mit einer nachgiebigen Wand umfassen, die im Wesentlichen von vom nach hinten gerichtet ist, so dass sie aufgeblasen und versteift wird durch die Luft, die in sie eindringt, wenn das Fahrzeug fährt, und deren Wand wenigstens teilweise durch ein Element (6) gebildet wird, das auf der Außenseite oder auf der Innenseite der genannten Decke angebracht ist,
**dadurch gekennzeichnet, dass** die Röhre (8) einen Luftdurchgangsquerschnitt aufweist, der von der Lufteintrittsöffnung (9) zur Luftaustrittsöffnung (10) progressiv abnimmt.

2. Schürze nach Anspruch 1, bei der die Röhre einen Luftaustrittsquerschnitt (10) aufweist, der kleiner ist als ihr Lufteintrittsquerschnitt (9).

3. Schürze nach einem der vorangehenden Ansprüche, bei der Einrichtungen zum Verstellen des Lufteintrittsquerschnitts und/oder des Luftaustrittsquerschnitts vorgesehen sind.

4. Schürze nach einem der vorangehenden Ansprüche, bei der die Wand der Röhre teilweise durch die genannte Decke und teilweise durch das angebrachte Element (6) gebildet wird.

5. Schürze nach einem der vorangehenden Ansprüche, bei der die Wand der Röhre ganz durch das angebrachte Element gebildet wird.

6. Schürze nach einem der vorangehenden Ansprüche, bei der die Röhre im Wesentlichen gerade ist.

7. Schürze nach einem der Ansprüche 1 bis 5, bei der die Röhre gekrümmt ist.

8. Schürze nach einem der vorangehenden Ansprüche, bei der die Röhre einen einzigen Lufteintritt (9) aufweist und sich ihn wenigstens zwei Luftaustritte (10-1, 10-2) ver-zweigt.

9. Schürze nach einem der vorangehenden Ansprüche, bei der wenigstens zwei Röhren (8-1, 8-2, 8-3) in der Richtung der Höhe und/oder der Richtung der Breite des Fahrzeugs gegenseitig aneinander stoßen.

10. Schürze nach einem der vorangehenden Ansprüche, bei der wenigstens zwei Röhren in der Richtung der Höhe und/oder der Richtung der Breite des Fahrzeugs gegenseitig beabstandet sind.
